# EUROPEAN PATENT APPLICATION

(11) **EP 4 160 830 A1**
(43) Date of publication of application: **05.04.2023**
(21) Application number: 22197039.5
(22) Date of filing: 22.09.2022
(51) Int. Cl.: H01R 13/502, A62C 3/16, A62C 35/10

(54) **HOUSING OF ELECTRICAL CONNECTORS WITH AN AUTONOMOUS FIRE PREVENTION SYSTEM AND PROTECTION METHOD OF ELECTRICAL CONNECTORS**

(30) Priority: 29.09.2021 PL 43905921; 29.09.2021 PL 13029321 U
(71) Applicant: Binda, Urszula, 43-300 Bielsko-Biala (PL); Malysz, Wojciech, 43-436 Gorki Wielkie (PL)
(72) Inventor: Binda, Urszula, 43-300 Bielsko-Biala (PL); Malysz, Wojciech, 43-436 Gorki Wielkie (PL)
(74) Representative: Tyrala, Magdalena

(57) **Abstract**

An electrical connector housing is made of ceramic and / or composite material, which has an elongated, hollow shape formed by at least two parts (a and b) connected to each other by means of a connecting element (4), the housing (1) has openings (2) at its ends, whose shape corresponds to the ends of the connector (9), the inside of the housing (1) contains the extinguishing agent (3). The method of securing the electrical connector comprises placing the connector in a sealed housing (1) made of ceramic material and / or composite material in which the extinguishing agent (3) is placed.

## Description

The subject of the invention is a housing for electrical connectors and fittings containing a fire prevention measure. The invention also relates to a method of securing electrical connectors by means of a housing.

All installations and devices, the operation of which is or is based on the flow of electric current, is exposed to the negative effects of electric surges, overloads or similar disturbances. They arise when the characteristics of the flowing electric current do not correspond to the characteristics provided for a given installation. The reason for such non-compliance may be factors inherent in the installation itself, such as improper assembly, mechanical damage, pollution, etc., and external factors such as atmospheric surges or other violent atmospheric phenomena, e.g. temperature fluctuations, precipitation, etc. Each installation and an electrical device is as reliable and efficient as its most sensitive components are. Electrical connectors and couplings are points where electrical cables connect structurally to other electrical cables or to other devices. These are the places most exposed to the effects of improper flow of electricity. These effects are primarily a rapid increase in temperature, up to the temperature of the electric arc (over 3000 ° C), in which most materials either oxidize rapidly (ignition and fire) or rapidly change their state of aggregation. Both of these phenomena destroy the electrical system and cause a fire.

Such a problem occurs, for example, in photovoltaic panels that are connected in series and in parallel using connectors, e.g. with the symbol MC4.

In the state of the art, from EP 2674198 entitled "Autonomous Fire Suppression" there is known an autonomous fire extinguishing agent made of a material having extinguishing properties, consisting of microcapsules filled with an extinguishing mixture with a size from 2 to 100 µm, the microcapsules consisting of closed halocarbons in a polymeric shell of polyurea and / or polyurethane and a binder, wherein the binder is a composite material comprising a polymer component and mineral fibers and / or particles. The stand-alone fire extinguishing agent may be tile-shaped. The description also discloses an item that uses an autonomous fire extinguishing agent to extinguish a fire. In use, the stand-alone fire extinguishing agent is placed at the site of a potential fire hazard and extinguishes the fire after ignition at an early stage. The fire is extinguished by halocarbon vapors, which are liberated abundantly when the refrigerant is heated above 110 ° C, when the microcapsules break. The fire is extinguished within 10 to 20 seconds after ignition, preventing the protected objects from being damaged. The agent is effective in protecting against fire of electric switchboards and boxes, engine compartments of the vehicle, transformers and server stations, and other electric switching devices and drive units.

In the prior art, the description CN208738495U also discloses a fire protection device for a photovoltaic installation coupler consisting of a flame-retardant and heat-resistant ceramic protective tube for connecting a plug-in connector of a photovoltaic energy generator. The device is used for galvanic isolation. The protective tube is provided with at least two mounting structures on both sides in the longitudinal direction for fixing the retaining element. The mounting structure includes an upper mounting hole and a lower mounting hole, and a retainer member is simultaneously inserted into the upper mounting hole and the lower mounting hole. Preferably, the upper mounting hole and the lower mounting hole are on the same central axis. The ceramic protection tube is placed to the side of the male plug or female insert before inserting the male plug and female plug of the PV power system connector, and the male plug and female insert are connected. This solution isolates the joint from direct contact with the roof tile or steel cantilever rail, preventing mismatching joints, poor contact, electric arcing, and electric shock to operating and maintenance personnel.

The aim of the invention is to develop a method of fire and ignition protection for electrical installations, electrical connectors, and the construction of universal housings for electrical connectors. The aim of the invention is also to develop a protection structure that would eliminate the risk of overvoltage in the connector and the occurrence of ignition and fire of the electrical installation and its accompanying devices and the environment. The aim of the invention is therefore to develop a security system, the use of which would not interfere with the existing structures and would allow the implementation of autonomous fire prevention systems ASPP (Autonomous Fire Prevention System ), eliminating the risk of ignition and fire.

### Disclosure of the invention

According to the invention, an electrical connector housing is made of ceramic and / or composite material and / or plastic, the housing having an elongated, hollow shape formed by at least two parts for housing the electrical connector. The housing has openings at the ends for routing wires. The essence of the invention consists in the fact that the housing contains the extinguishing agent inside and its parts are connected to each other by means of internal connecting elements. The shape and internal dimensions of the holes correspond to the shape and external dimensions of the wires at the ends of the electrical connector.

Preferably, the housing parts are connected to each other longitudinally, the connection being fixed by a connecting band.

Preferably, the inside of the housing is covered with heat-resistant paint.

Preferably, the extinguishing agent is in the form of a plate containing microcapsules with the extinguishing agent.

Preferably, the inside of the housing is covered with a paint or varnish containing microcapsules with an extinguishing agent.

Preferably, the inside of the housing is covered with microcapsules containing the extinguishing agent, the microcapsules being attached to the inside of the housing by an adhesive. Preferably, the housing is cylindrical or spindle-shaped.

Preferably, the connecting element is an internal recess-groove connection.

The essence of the invention is also the method of securing the electrical connector, characterized in that the electrical connector is placed in a housing made of ceramic material and / or composite material and / or plastic, in which the extinguishing agent is placed. Preferably, a plate containing microcapsules with the extinguishing agent is used as the extinguishing agent.

Preferably, the inside of the housing is covered with a microcapsule extinguishing agent containing the extinguishing agent, the microcapsules being attached to the inside of the housing by an adhesive.

Preferably, the inside of the housing is first covered with a heat-resistant paint.

The advantage of the ASPP housing is the technical construction of the physical connector or electrical connector shell integrated with the ASPP. This design ensures: isolation of sudden electrical phenomena (overvoltages, overloads) from the environment, concentration of the released extinguishing agent causing the displacement of oxygen from the environment, eliminating the conditions for the emergence and development of a fire, and cooling of the environment, preventing re-ignition or self-ignition. ASPP housings are autonomous points of fighting the sources of fires at the earliest stage of their development.

The invention is shown in the figure, where:
Fig. 1, Fig. 4, Fig. 7 is an isometric view of the housing in various exemplary forms,
Fig. 2, Fig. 4, Fig. 8 shows one part of the housing with an electrical connector therein,
Fig. 3, Fig. 6, Fig. 9 shows the second part of the housing with a fire prevention device inside it,
Fig. 10, Fig. 11, Fig. 12 show the housings with different variants of the connecting band.

The electrical connector or fitting housing comprises a structure consisting of at least two permanently or releasably connected elements. When assembled, the housing completely covers the electrical connector or coupler, including the appropriate length of the incoming and outgoing cable. The housing structure is sealed against moisture and dirt.

Inside, the housing contains an extinguishing agent in the form of one of the following autonomous ASPP fire prevention systems in the form of:
a) a plate containing an ASPP agent,
b) internal coating made of heat-resistant paint or varnish and a plate containing the ASPP agent,
c) internal coating made of heat-resistant paint or varnish and microcapsules with the extinguishing agent ASPP,
d) microcapsules with the ASPP extinguishing agent.

Preferably, the housing with the built-in ASPP system is marked on the outside with the following word sign permanently: "ASPP HOUSING".

Each of the types of fire protection described below is a separate autonomous fire prevention system ASPP, placed independently, permanently in the housing of electrical connectors according to the invention. ASPP systems use microcapsules with sizes above 1 µm, preferably 2 to 100 µm, in which under the polymer shell there is an extinguishing agent in the form of a liquid gas mixture called FK-5-1-12 (1,1,1,2, 2,4,5,5,5 - nonafluoro - 4 - (trifluoromethyl) - 3 pentanone) or in the form of another gas mixture with similar or more advantageous characteristics and properties. The above-mentioned FK-5-1-12 mixture has a zero ozone depletion potential (ODP "0"), the so-called global warming potential of 1 (GWP "1") and the so-called an atmospheric life time (ALT) of five days.

In the above-mentioned embodiment a), the plate containing the ASPP agent is a flexible or hard (rigid) composite plate containing microcapsules in its structure, in which a gaseous extinguishing agent in a liquid state is provided under the cover of the polymer shell, for example as described above. The ASPP plate is glued on the internal, smooth wall of the connector housing, in a place not interfering with the installation covered with the housing. The dimensions of the ASPP plates are adapted to the internal structure of electrical connector housings or connectors and ensure a sufficient concentration of microcapsules containing the extinguishing agent for the gross volume of such housings. In the event of an increase in temperature in a closed housing above 120 ° C, the microcapsule shell contained in the ASPP plate is torn, and the released extinguishing agent, changing the state of aggregation from liquid to gaseous, displaces oxygen from the environment eliminating ignition and cools the place where the temperature has risen sharply.

An example of such a plate is the product based on the prior art EP 2674198 under the trade name Fipron^{®}.

In the above-mentioned embodiment b), the heat-resistant paint or varnish is resistant to a temperature of at least + 750 ° C. This material is applied by spraying on the inner surfaces of connector housings or fittings. After the paint or varnish has hardened, suitably sized ASPP plates, described above, are glued onto the internal, smooth walls of the housing. In the event of a sharp increase in temperature in a closed housing, heat-resistant paint or varnish protects the housing structure against its effects, and the extinguishing agent released from the activated ASPP plate, changing the state of aggregation from liquid to gaseous, displaces oxygen from the environment, eliminating ignition and cools the place temperature where it has rapidly grown. Water-based or resin-based paints or varnishes with heat resistance above + 750 ° C are used here. For example, fire-retardant epoxy chemically hardening paint.

In the above-mentioned embodiment c), a paint or varnish of suitable density and viscosity is mixed in suitable proportion with microcapsules containing an extinguishing agent, e.g. an extinguishing agent as described above. The resulting mixture of paint / varnish and microcapsules is applied by pressure spraying to the inner surfaces of the housing of electrical connectors or fittings. In the event of a rapid increase in temperature in a closed housing, the shell of microcapsules suspended in paint / varnish is torn, and the released extinguishing agent, changing its state from liquid to gaseous, displaces oxygen from the environment, eliminating ignition and cools the place where the temperature has risen sharply.

In the above-mentioned embodiment d) a sufficient number of microcapsules containing an extinguishing agent, e.g. the extinguishing agent described above, are sprayed onto the entire inner surface of the housing of electrical connectors or fittings, previously covered with glue. Virtually any adhesive that will stick the microcapsules to the housing is used. It can be a water-based or synthetic solvent-based adhesive. The only limitation is that the adhesive does not react with the polymeric shell of the microcapsules and does not damage them. The adhesive and microcapsules can be applied to the inner surface of the housing by pressure spraying. In the event of a rapid increase in temperature in a closed housing, the mantle of microcapsules trapped in the adhesive tears, and the released extinguishing agent, changing the state of aggregation from liquid to gaseous, displaces oxygen from the environment eliminating ignition and cools the place where the temperature has risen sharply.

The internal shape of the housing follows the original design of the connector or electrical coupler. A properly fitted casing will allow for precise closure of both parts of the casing in such a way as to sufficiently protect the connector or electrical connector against the adverse effects of weather conditions and to ensure sufficient airtightness for the effective operation of ASPP autonomous fire prevention systems.

The external shape of the housing can take any form depending on the design of the connector or coupler and the technical conditions of the installation. The forms of the outer shapes of the housings are shown in the drawings and the examples below. It is preferably a cylindrical shape or a prism shape based on a regular polygon or a spherical shape, preferably an elongated oval shape, e.g. an elliptical cylinder.

The materials from which the housing can be made are generally ceramic materials, composite materials based on ceramic materials or plastics, depending on the technical conditions and the choice: ABS, PLA, Pet G, PEEK, NPower^{®} and Ultem^{®}, and all derivatives of the above materials.

The housing can be made of any known ceramic materials, for example based on aluminum oxide (Al2O3), zirconium oxide (ZrO2), silicon nitride (Si3N4), aluminum nitride (AlN), silicon carbide (SiC), boron carbide (B4C). Ceramic materials are hard, non-flammable and inert. This is their main advantage over plastics. Moreover, they are also excellent electrical insulators.

ABS is a thermoplastic copolymer that is very popular as a filament due to its durability at a relatively low cost. ABS is also a material well suited for molding the housing by injection and extrusion. In addition, ABS plastic has a good non-flammability level that meets the standards. An example of such a material is Sinkral^{®} SK 112 from eni Versalis.

PLA and ABS are the most popular materials for 3D printing in FDM (Fused Deposition Modeling) technology - a thermoplastic material pressed through nozzles.

Unlike ABS, PLA is biodegradable and is derived from natural ingredients such as corn starch or sugar cane, which is why it deserves the name of green plastic. PETG is a polyester material, made of PET and Glycerol, with a wide range of applications - after receiving the relevant certifications, it may have contact with food, for example. PETG, unlike the above materials, has been developed for the purposes of 3D printing by modifying the material from which plastic packaging (PET) is made.

PEEK - semi-crystalline polymer from the polyaryletherketone family is one of the most mechanically and thermally durable materials for additive printing in FDM technology. Ultem^{®} is a cheaper alternative to PEEK and is a TPI polyetherimide. Npower^{®} is a PPS (polyphenylene sulphide) alloy fiber.

The housing can also be made of a composite material. There are many types of composite materials useful in making the casing of the invention. A specialist is able to select such a material routinely without conducting additional tests, because the parameters of composite materials are determined by their manufacturers. An example of such a composite is TEPEX Dynalite, which is a thermoplastic composite with a polyamide matrix reinforced with continuous fibers, e.g., glass or carbon fibers. This material is also available with a matrix based on polycarbonates with flame retardant additives and is non-flammable. An example of a ceramic-based composite material is glass fiber reinforced plastic, the so-called GRP.

A desirable property of both thermoplastic and composite materials is their non-flammability or low flammability. The material should preferably have a non-flammable level according to UL 94 V-0.

Technologies and methods of making plastic housing elements are: injection, 3D printing, machining, extrusion, casting. In the injection technology, housing elements are formed by injecting a plasticized material into a mold, in which such material solidifies (solidifies) in the so-called a molding (fitting). The injection molding process is carried out in devices called injection molding machines and concerns the molding of thermoplastics or thermosets. In 3d printing technology, housing elements are formed in the so-called 3D printing (3D printing) where 3D printers produce three-dimensional objects by mapping a digital model. The material used in 3D printing is also plastics in the form required by the technical characteristics of the selected 3D printer. Housing elements can be formed in the process of machining consisting in mechanical removal of individual layers of the allowance from the processed material until the desired shape of the element is obtained. The materials used in the machining process are plastics in the form of raw solids. The casting technology consists in pouring a previously prepared mold with a liquid material, e.g. plastics.

The ceramic housing is produced by a known firing process.

Preferably, the housing is a combination of two longitudinally connected elements, as it can then be superimposed on an existing joint. Then both elements are superimposed on the connected joint.

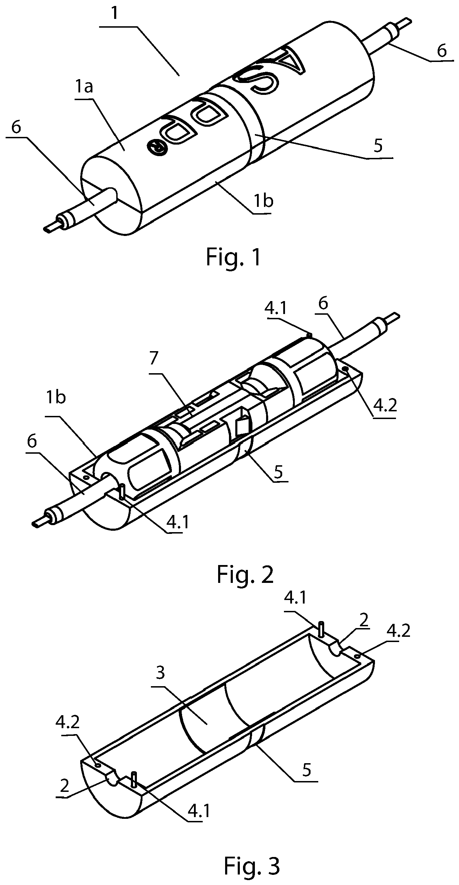

The housing of the electric connector 1 is shown in Fig. 1- Fig. 12 and is made of a ceramic material or a composite material or a combination of these materials or of a plastic material.

Figures 1-3 show a housing 1 which has an elongated, hollow shape formed by at least two longitudinally interconnected parts 1a and 1b. The parts 1a and 1b are connected by a connecting element 4. The internal shape of the housing 1 corresponds to the external shape of the connector 7. The housing 1 has holes 2 at its ends, the shape and internal dimensions of which correspond to the circumference of the conductors 6 of the connector 7. The housing 1 inside contains an extinguishing agent 3. Interior the housing 1 can be covered with a heat-resistant paint, the properties of which are described above. The extinguishing agent 3, previously described as ASPP, may be in the form of a plate containing microcapsules with the extinguishing agent. The extinguishing agent 3 may also be in for of paint or varnish coating containing microcapsules with the extinguishing agent. The extinguishing agent 3 may also be in the form of coating with microcapsules containing the extinguishing agent, the microcapsules being attached to the inside of the housing by an adhesive.

In a preferred embodiment, the housing 1 is cylindrical. The housing 1 may also have another advantageously elongated shape, adapted to the shape of the joint 7. It may, for example, be a spindle shape.

The connecting element of the housing 1 may be an internal recess-groove connection in the form of a pin or a plurality of pins 4.1 (Fig. 2). The pins 4.1 may be integral with the housing parts 1. The material of the connecting piece may be the same as the material of the housing, e.g. ceramic, composite or plastic. The connecting element has the task of connecting, positioning and fixing the two parts of the casing 1 to each other so that they do not move.

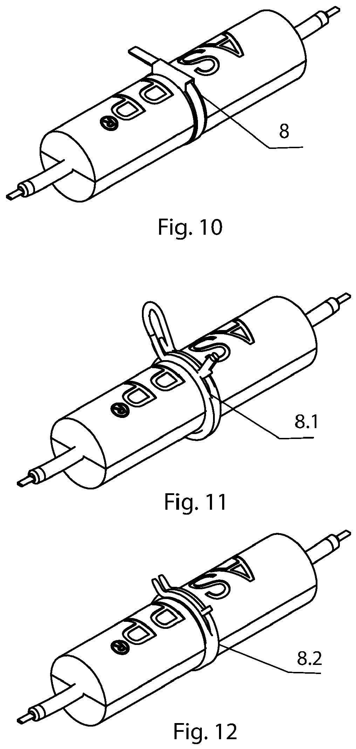

The two housing parts 1 are connected to each other by a connecting band 8, in different variants shown in Fig. 10 - Fig. 12. As 8 in the form of a binding band in Fig. 10, as 8.1 and 8.2 as a spring clip in Fig. 11 and Fig. 12. The connection band 8 may be of any form to prevent the parts of the housing from becoming detached. For example, it could be an ordinary plastic zip tie. The form of the band is not an object or limitation of the present invention.

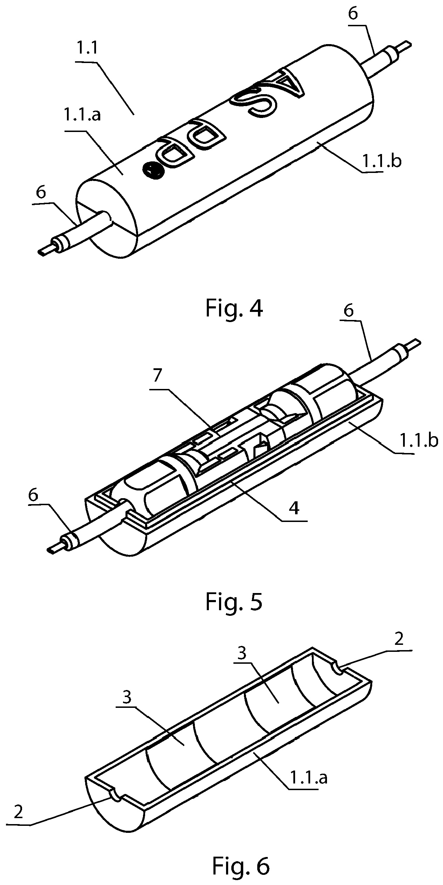

Preferably, on the outside of the casing there are means to prevent the band 8 from moving. Preferably it is a circumferential recess 5. The band 8 can also be prevented from moving by convex elements, e.g. inscriptions, as shown in Fig. 4.

The openings 2 in the housing are used to route the wires 6 to and from the connector 7. The openings 2 should quite accurately enclose the wires 6 so that no water and moisture can get inside, and to ensure sufficient airtightness for the effective operation of autonomous prevention systems the ASPP fire protection system.

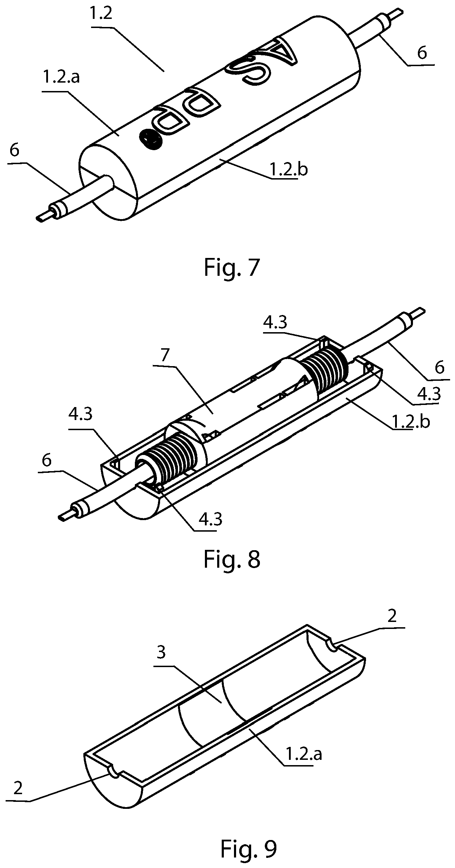

The ASPP 3 extinguishing agent can be present on the entire inner surface of the casing 1 or on a part of it. For example, the ASPP 3 extinguishing agent in the form of a plate may be placed in one piece centrally as shown in Fig. 3 and Fig. 9, or in two pieces as shown in Fig. 6. tile, paint or varnish and tile, paint or varnish and microcapsules or adhesive-bonded microcapsules.

In another example (Fig. 4-Fig. 6) the housing 1.1. it consists of two parts, 1.1.a and 1.1. b in the shape of a hollow half-cylinder. The two housing parts are connected by an internal connecting piece 4. The connecting piece 4 has the form of a projection guided along the circumference of one part 1.1.a of the housing 1.1. The circumferential projection is located inside the second housing portion 1.1.b. The connecting element 4 has the task of connecting, positioning and locating the two parts of the casing 1 to each other so that they do not move.

After joining, both bases of the housing thus formed have holes 2.1. intended to lead out the conductors 6 of the electrical connector 7. On the inner walls of the housing 1.1 there is an extinguishing agent ASPP 3 in the forms described above, i.e. tile, paint or varnish and plate, paint or varnish and microcapsules or microcapsules fixed with adhesive. The two housing parts are connected to each other around the existing electrical connector 7 by means of a connecting band 8, 8.1, or 8.2, shown in Fig. 10 - Fig. 12, or by means of any other suitable band or clamp. The outer surface of the housing 1.2 may advantageously be provided with convex elements, e.g. inscriptions, which, when appropriately arranged, prevent the connection band 8, or 8.1, or 8.2 from moving.

In a further example (Fig. 7 - Fig. 9) the housing 1.2. consists of two parts, 1.2.a and 1.2.b, in the form of a hollow half-cylinder. Both housing parts are connected by means of a connecting element in the form of internal projections 4.3, acting as a latch. The connecting element has the task of connecting, positioning and fixing the two parts of the casing 1 to each other so that they do not move. After joining, both bases of the cylinder formed in this way have holes 2.2. intended to lead out the conductors 6 of the electrical connector 7. On the inside walls of the housing 1.2 there is an extinguishing agent ASPP 3 in the forms described above, i.e. tile, paint or varnish and plate, paint or varnish and microcapsules or microcapsules fixed with adhesive. The two housing parts are connected to each other around the existing electrical connector 7 by means of a connecting band 8, 8.1, or 8.2 shown in Fig. 10-Fig. 12.

The method of securing the electrical connector comprises placing the connector 7 in a sealed casing 1 made of ceramic material and / or composite material and / or plastic, in which the extinguishing agent 3 is placed.

In the method according to the invention, as the extinguishing agent 3 in the forms previously described, a plate containing microcapsules with the extinguishing agent or microcapsules containing the extinguishing agent is preferably used, the microcapsules being attached to the inside of the housing by means of an adhesive. Preferably, the inside of the housing 1 is first covered with a heat-resistant paint.

In the method according to the invention, various forms of housing can be used, the interior of which is adapted to the shape of the joint 7.

In the above-described housings, as well as in the described method, the materials described above, such as ceramics, composite materials, plastics and their combinations, can be used to produce the housings. The appropriate level of non-flammability of these materials is important. At present, the ABS polymer seems to be the most advantageous in terms of non-flammability and the cost of producing the housing, from which the housing is molded by injection into a previously prepared mold.

### Industrial applicability.

The housing of electrical connectors with the ASPP Autonomous Fire Prevention System "ASPP HOUSING" is used in all electric current installations, eliminating significantly the risk of fire which could be caused by overloaded or mechanically damaged electrical connectors or fittings. The area of application of ASPP casings covers all electrical installations, including fire protection. parallel and series connections in photovoltaic installations.

## Claims

1. An electrical connector housing made of ceramic and / or composite material and / or plastic, the housing (1) having an elongated, hollow shape formed by at least two parts (1a and 1b) for housing the electrical connector (7), the housing (1) has openings at its ends for leading the conductors, **characterized in that** the housing (1) contains an extinguishing agent (3) inside and the parts (1a and 1b) are connected to each other by means of internal connecting elements (4, 4.1, 4.2, 4.3), and the shape and internal dimensions of the openings (2) correspond to the shape and external dimensions of the conductors (6) at the ends of the electrical connector (7).

2. The housing according to claim 1 **characterized in that** the housing parts (1a, 1b) are connected to each other longitudinally, the connection being fixed by a connecting band (8).

3. The housing according to claim 1 from 1 to 2, **characterized in that** the inside of the housing (1) is covered with a heat-resistant paint.

4. The housing according to claim 1 according to any of the claims 1 to 3, **characterized in that** the extinguishing agent (3) is in the form of a plate containing microcapsules with the extinguishing agent.

5. The housing according to claim 1 **characterized in that** the inside of the housing (1) is covered with a paint or varnish containing microcapsules with an extinguishing agent.

6. The housing according to claim 1 **characterized in that** the inside of the housing (1) is covered with microcapsules containing the extinguishing agent, the microcapsules being attached to the inside of the housing by an adhesive.

7. The housing according to any one of claims 1-6, **characterized in that** it is cylindrical or spindle-shaped.

8. The housing according to any of claims 1-7, **characterized in that** the connecting element (4, 4.3) is one or more internal projections on one housing part 1 latching both housing parts.

9. The housing according to any of the claims 1-8, **characterized in that** its material is ABS plastic.

10. A method of securing an electrical connector, **characterized in that** the connector (7) is placed in a sealed housing (1) made of ceramic material and / or composite material and / or plastic, in which an extinguishing agent (3) is placed.

11. The securing method according to claim 10, **characterized in that** a plate containing microcapsules with the extinguishing agent is used as the extinguishing agent (3).

12. The securing method according to claim 10, **characterized in that** the inside of the housing (1) is covered with an extinguishing agent (3) in the form of micro-capsules containing the extinguishing agent, the microcapsules being attached to the inside of the housing by means of an adhesive.

13. The securing method according to claim 10 or 11 or 12, **characterized in that characterized in that** the inside of the housing (1) is initially covered with a heat-resistant paint.
